# EUROPÄISCHE PATENTSCHRIFT

(11) **EP 3 603 374 B1**
(45) Veröffentlichungstag und Bekanntmachung des Hinweises auf die Patenterteilung: **12.08.2026**
(21) Anmeldenummer: 19178618.5
(22) Anmeldetag: 06.06.2019
(51) Int. Cl.: A01D 41/00, A01D 41/12, B62D 55/02, B62D 55/065

(54) **LANDWIRTSCHAFTLICHE ARBEITSMASCHINE**
AGRICULTURAL MACHINE
ENGIN DE TRAVAIL AGRICOLE

(30) Priorität: 03.08.2018 DE 102018118908
(43) Veröffentlichungstag der Anmeldung: 05.02.2020
(73) Patentinhaber: CLAAS Selbstfahrende Erntemaschinen GmbH, 33428 Harsewinkel (DE)
(72) Erfinder: Fischer, Frédéric, 59823 Arnsberg (DE); Kriebel, Bastian, 79104 Freiburg (DE); Wielenberg, Andreas, 32049 Herford (DE); Schulze Zumkley, Hendrik, 33397 Rietberg (DE); Renger, Hermann, 33129 Delbrück (DE); Kersten, Johannes, 49176 Hilter a. TW (DE); Bellmann, Rainer, 33428 Harsewinkel (DE)
(74) Vertreter: CLAAS Gruppe

(56) Entgegenhaltungen:
- EP-A1- 2 977 300
- WO-A1-98/40266
- CN-A- 108 077 223
- DE-U1- 202004 004 106
- DE-U1- 202012 103 930
- FR-A1- 2 828 673
- KR-A- 20080 065 265
- US-A- 5 191 952
- US-A1- 2017 113 742

## Beschreibung

Die vorliegende Erfindung betrifft eine landwirtschaftliche Arbeitsmaschine gemäß dem Oberbegriff des Anspruches 1. Insbesondere betrifft die vorliegende Erfindung eine als selbstfahrende Erntemaschine ausgeführte landwirtschaftliche Arbeitsmaschine wie einen Mähdrescher.

Eine landwirtschaftliche Arbeitsmaschine, insbesondere eine selbstfahrende Erntemaschine, umfasst zumindest ein zwei Raupenlaufwerke aufweisendes Raupenfahrwerk, welches an einer Achse des Fahrzeugs angeordnet ist, wobei jedes Raupenlaufwerk eine vordere Umlenkrolle und eine hintere Umlenkrolle sowie zumindest eine dazwischenliegende Stützrolle aufweist.

Das Ausstatten von landwirtschaftlichen Arbeitsmaschinen mit Raupenfahrwerken mit dem Ziel das Gewicht der Arbeitsmaschine auf eine größere Aufstandsfläche zu verteilen, ist aus dem Stand der Technik bekannt.

So beschreibt die DE 200 00 737 U1 ein Raupenfahrwerk der eingangs genannten Art für landwirtschaftliche Zug- und Großmaschinen. An einem Maschinenrahmen sind einander gegenüberliegende Raupenlaufwerke mittels einer drehbar gelagerten Schwinge angelenkt. Das Raupenlaufwerk weist eine vordere und eine hintere Umlenkrolle sowie mehrere zwischen diesen angeordnete Stützrollen auf. In einer Ebene oberhalb der Umlenk- und Stützrollen sind Tragrollen angeordnet, so dass sich eine trapezförmige Kontur des Raupenlaufwerks ergibt. Die Raupenlaufwerke sind mittig an der jeweiligen Achse angeordnet, d.h. sie pendeln um den Mittelpunkt des Raupenlaufwerks.

Aus der DE 10 2011 114 536 A1 ist eine landwirtschaftliche Arbeitsmaschine bekannt, welche an ihren Achsen Raupenfahrwerke aufweist. Jedes Raupenlaufwerk weist eine vordere und eine hintere Umlenkrolle auf, zwischen denen Stützrollen angeordnet sind. Die Raupenlaufwerke sind ebenfalls mittig an der jeweiligen Achse angeordnet.

Bei den aus dem Stand der Technik bekannten landwirtschaftlichen Arbeitsmaschinen mit Raupenfahrwerken ergibt sich aus der Höhe der Raupenlaufwerke sowie der mittigen Lage der Pendelachse am Raupenlaufwerk die Problematik, dass große Lenkeinschläge nicht kollisionsfrei möglich sind oder einer Anpassung des Chassis der landwirtschaftlichen Arbeitsmaschine bedürfen, um den hierfür notwendigen Freiraum zu schaffen. Letzteres ist gerade vor dem Hintergrund einer Nachrüstbarkeit von landwirtschaftlichen Arbeitsmaschine mit einem Raupenfahrwerk nicht darstellbar.

Ausgehend vom genannten Stand der Technik liegt der Erfindung die Aufgabe zugrunde, eine landwirtschaftliche Arbeitsmaschine der eingangs genannten Art weiterzubilden, die große Lenkeinschläge der Raupenlaufwerke ermöglicht, ohne dass es zu Kollisionen mit dem Chassis oder einer im Bereich der Raupenlaufwerke angeordneten Baugruppe der Arbeitsmaschine kommt.

Diese Aufgabe wird erfindungsgemäß durch die Merkmale des Anspruchs 1 gelöst.

Vorteilhafte Weiterbildungen der Erfindung sind Gegenstand der Unteransprüche.

Gemäß dem Anspruch 1 wird eine selbstfahrende Erntemaschine, vorgeschlagen, die zumindest ein zwei Raupenlaufwerke aufweisendes Raupenfahrwerk, welches an einer Achse des Fahrzeugs angeordnet ist, umfasst, wobei jedes Raupenlaufwerk eine vordere Umlenkrolle und eine hintere Umlenkrolle sowie zumindest eine dazwischenliegende Stützrolle aufweist. Um große Lenkeinschläge der Raupenlaufwerke zu ermöglichen, ist erfindungsgemäß vorgesehen, dass die Achse, welche die Raupenlaufwerke beidseitig aufnimmt, als eine Lenktriebachse ausgebildet ist, wobei die jeweilige in Vorwärtsfahrrichtung weisende vordere Umlenkrolle einen größeren Durchmesser als die hintere Umlenkrolle aufweist.

Die Reduzierung des Durchmessers der hinteren Umlenkrolle erfordert einen geringeren Freiraum für das Ein schwenken in Richtung des Chassis der Arbeitsmaschine, d. h., dass ein bestehende Freiraum der Arbeitsmaschine im rückwärtigen Bereich des jeweiligen Raupenlaufwerkes besser ausgenutzt werden kann. Aufgrund der im Wesentlichen keilförmigen Kontur des Raupenlaufwerkes kann das deutlich flachere Ende zumindest abschnittsweise unter das Chassis der Arbeitsmaschine schwenken, wodurch ein größerer Lenkwinkel umsetzbar ist. Darüber hinaus lässt sich eine Kollision mit im Bereich der Raupenlaufwerke angeordneten Baugruppen vermeiden.

Dabei kann zu einer Übertragung einer Lenkbewegung das jeweilige Raupenlaufwerk mittels einer Achsschenkellenkung an der Lenktriebachse um eine vertikal verlaufende Schwenkachse schwenkbar angelenkt sein.

Bevorzugt kann das jeweilige Raupenlaufwerk außermittig an der Lenktriebachse angeordnet und um diese schwenkbar sein. Die Verlagerung der Pendelachse des Raupenlaufwerks gegenüber dem Stand der Technik in Richtung der vorderen Umlenkrolle ermöglicht eine verbesserte Ausnutzung des bestehenden Freiraums für Lenkbewegungen der Raupenlaufwerke in deren rückwärtigem Bereich. Zugleich reduziert sich der Bedarf an Freiraum im Bereich der vorderen Umlenkrolle des jeweiligen Raupenlaufwerkes. Zudem können dadurch die hinteren Umlenkrollen vom Boden abgehoben werden.

Insbesondere kann die vordere Umlenkrolle der Lenktriebachse im Wesentlichen achsparallel zugeordnet sein. Dies hat den Vorteil, dass das durch die Lenktriebachse bereitgestellte Antriebsmoment im Wesentlichen ohne Umlenkung direkt auf die vorderen Umlenkrollen übertragen wird.

Weiterhin kann zumindest die jeweilige hintere Umlenkrolle an einem Tragrahmen angeordnet sein, welcher um eine außermittige, im Bereich der vorderen Umlenkrolle positionierte, horizontal verlaufende Achse schwenkbar ist. Dabei kann die horizontal verlaufende Achse mit der Pendelachse der vorderen Umlenkrolle, d.h. der Lenktreibsachse, zusammenfallen. Somit kann fahrsituationsabhängig die jeweilige hintere Umlenkrolle vom Boden abgehoben werden sodass es beispielsweise bei Kurvenfahrten zu einer Reduzierung der Aufstandsfläche der Raupenlaufwerke kommt. Aufgrund des kleineren Durchmessers der hinteren Umlenkrollen kann ausreichend hoch ausgehoben werden, ohne das Bestehen einer Kollisionsgefahr mit dem Chassis oder sonstigen Baugruppen der Arbeitsmaschine. An dem Rahmenteil kann zudem die zumindest eine Stützrolle angeordnet sein.

Hierbei kann zur Abstützung der kleineren Umlenkrolle des jeweiligen Raupenlaufwerks gegenüber der Lenktriebachse zumindest ein Aktuator vorgesehen sein, welcher an dem Tragrahmen zwischen der vorderen Umlenkrolle und der hinteren Umlenkrolle und einem Rahmenelement, welches am Achsschenkel oberhalb der Lenktriebachse des jeweiligen Raupenlaufwerks angeordnet ist, angelenkt sein. Der Aktuator ist bevorzugt als Linearaktuator ausgeführt. Der Aktuator greift beabstandet zur Drehachse der hinteren Umlenkrolle an dem Rahmenelement an und übt eine Stützkraft auf die hintere Umlenkrolle aus. Der Aktuator dient unter anderem dazu, ein Umschlagen des jeweiligen Raupenlaufwerkes zu verhindern, indem dieser die sich durch die außermittige Anordnung der Pendelachse des Raupenlaufwerkes ergebende Veränderung der Gleichgewichtslage kompensiert.

Bevorzugt kann der zumindest eine Aktuator als ein doppeltwirkender Hydraulikzylinder ausgeführt sein.

Insbesondere kann der zumindest eine Hydraulikzylinder kolbenbodenseitig und kolbenringseitig jeweils mit einem hydraulischen Speicher verbunden sein. Hierdurch lässt sich eine Federung bzw. passive Bodenanpassung realisieren. Dazu können die Speicher ein Ölvolumen aufnehmen bzw. abgeben, welches in dem zumindest einen doppeltwirkenden Hydraulikzylinder hin und her bewegt werden muss, damit Bodenunebenheiten oder Steigungsänderungen, die zu einer Verschränkung zwischen Vorder- und Hinterachse führen, durch die Raupenlaufwerke ausgeglichen werden können.

Gemäß einer bevorzugten Weiterbildung kann der zumindest eine Hydraulikzylinder eines Raupenlaufwerks ansteuerbar sein, um den von dem Raupenlaufwerk ausgeübten Bodendruck zwischen der vorderen Umlenkrolle und der hinteren Umlenkrolle zu variieren. Dabei kann der zumindest eine Hydraulikzylinder eines Raupenlaufwerks ansteuerbar sein, die hintere Umlenkrolle zumindest zu entlasten oder anzuheben. Das Einstellen des von dem jeweiligen Raupenlaufwerk aufgebrachten Bodendrucks kann in Abhängigkeit von einem Betriebsmodus des landwirtschaftlichen Fahrzeugs variieren. So kann in einem Betriebsmodus Straßenfahrt der durch die Raupenlaufwerke aufgebrachte Bodendruck im Wesentlichen über die vordere Umlenkrolle auf die Fahrbahn übertragen werden. Dies wirkt sich insbesondere auf das Lenkverhalten aus, welches aufgrund der geringeren Aufstandsfläche verbessert wird. Das Entlasten der hinteren Umlenkrolle führt zu einer Verringerung des erforderlichen Lenkmomentes. Der Grund liegt dabei unter anderem in einer Verkürzung des effektiven Hebelarms, da nicht über die gesamte Kontaktfläche des Raupenlaufwerks hinweg gedreht werden muss, sondern im Extremfall lediglich über den Linienkontakt unterhalb der vorderen Laufrolle, wenn die hintere Umlenkrolle sowie die zumindest eine Stützrolle angehoben werden. In einem Betriebsmodus Feldfahrt steht eine gleichmäßige Bodendruckverteilung über die gesamte Aufstandsfläche der Raupenlaufwerke im Vordergrund. So kann dafür gesorgt werden, dass der Bodendruck über die Länge des Raupenlaufwerkes gleichmäßig ist. In einer Fahrsituation, welche das Rückwärtsfahren der landschaftlichen Arbeitsmaschine auf dem Feld erfordert, ist das Entlasten der hinteren Umlenkrolle gegebenenfalls bis zu einem geringfügigen Anheben sinnvoll, um zu vermeiden, dass sich die Raupenlaufwerke der Arbeitsmaschine in den Boden eingraben.

Gemäß einer vorteilhaften Weiterbildung kann an der Lenktriebachse beidseitig jeweils ein Vorgelegegetriebe angeordnet sein, welche die vorderen Umlenkrollen trieblich mit der Lenktriebachse verbinden.

Bevorzugt kann die Arbeitsmaschine eine Steuerungsvorrichtung umfassen, welche dazu eingerichtet ist, den zumindest einen Aktuator in Abhängigkeit von einem Hydraulikdruck in einem Lenkzylinder an der Lenktriebachse anzusteuern.

Alternativ oder zusätzlich kann die Arbeitsmaschine eine Steuerungsvorrichtung umfassen, welche dazu eingerichtet ist, den zumindest einen Aktuator in Abhängigkeit von einem Moment bei der Betätigung eines Lenkrades anzusteuern.

Weiterhin kann die Steuerungsvorrichtung dazu eingerichtet sein, den zumindest einen Aktuator in Abhängigkeit von einer Neigung der Arbeitsmaschine anzusteuern. Die neigungsabhängige Ansteuerung des zumindest einen Aktuators ermöglicht es, die sich aufgrund einer Neigung der Arbeitsmaschine ändernde Gewichtsverteilung zwischen der vorderen Umlenkrolle und der hinteren Umlenkrolle zu kompensieren.

Bevorzugt kann die Lenktriebachse als lenkbare vordere Achse oder hintere Achse der Arbeitsmaschine ausgebildet sein. Insbesondere als selbstfahrende Erntemaschinen ausgeführte Arbeitsmaschine, wie ein Mähdrescher oder ein Feldhäcksler, weisen eine lenkbare hintere Achse auf. Eine Ausgestaltung der landwirtschaftlichen Arbeitsmaschine als Vollraupe, d.h. einer Anordnung jeweils eines Raupenfahrwerks an der vorderen Achse und der hinteren Achse ist ebenfalls denkbar. Dabei können die vordere Achse und/oder die hintere Achse mit den erfindungsgemäßen Raupenlaufwerken ausgestattet sein. Weiterhin können die vordere Achse und/oder die hintere Achse mit einer Achsschenkellenkung ausgeführt sein. Insbesondere Mähdrescher weisen zumindest eine im Bereich der Raupenlaufwerke angeordnet Baugruppe auf, beispielsweise einen Spreuverteiler. Die erfindungsgemäße Ausgestaltung verhindert, dass das jeweilige Raupenlaufwerk in den von den Spreuverteilern abgegeben Gutstrom hineinragt. Die vorliegende Erfindung wird nachstehend anhand von in den Zeichnungen dargestellten Ausführungsbeispielen näher erläutert.

Es zeigen:
- Fig. 1: eine schematische Seitenansicht landwirtschaftlicher Arbeitsmaschinen gemäß einer ersten und einer zweiten Ausführungsform;
- Fig. 2: eine schematische Seitenansicht eines Raupenlaufwerks;
- Fig. 3: eine perspektivische Ansicht des Raupenlaufwerks gemäß Fig. 2;
- Fig. 4: eine perspektivische Ansicht eines Tragrahmens des Raupenlaufwerks;
- Fig. 5: eine Schnittansicht des Raupenlaufwerks entlang der Linie A-A gemäß Fig. 2;
- Fig. 6: ein vereinfachtes Hydraulikschema, aus welchem eine Ansteuerung eines Aktuator des Raupenlaufwerks hervorgeht;
- Fig. 7: ein Flussdiagramm der Ansteuerung des Raupenlaufwerks beim Lenken.

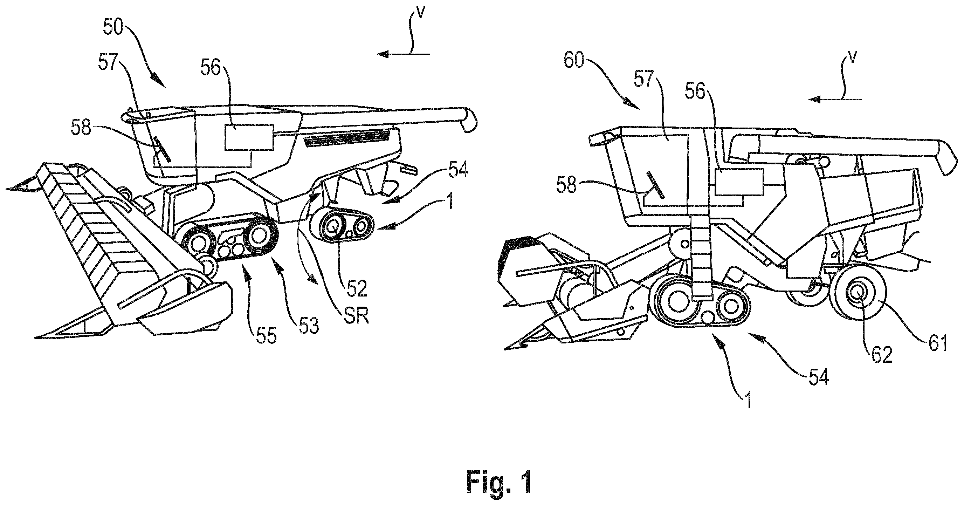

Die vorliegende Erfindung betrifft eine landwirtschaftliche Arbeitsmaschine 50, 60 welche insbesondere als eine selbstfahrende Erntemaschine, beispielsweise als ein Mähdrescher, wie in Fig. 1 dargestellt, ausgeführt ist. Die Darstellung in Fig. 1 zeigt zwei Arbeitsmaschinen 50, 60 gemäß einer ersten und einer zweiten Ausführungsform. Die landwirtschaftliche Arbeitsmaschine 50 gemäß der ersten Ausführungsform ist als Vollraupe ausgebildet und weist eine vordere Achse, die durch ein Raupenlaufwerk 55 verdeckt ist, sowie eine hintere, lenkbare Achse 52 auf. An der vorderen Achse und der hinteren Achse 52 sind jeweils Raupenfahrwerke 53 bzw. 54 angeordnet. Mit dem Bezugszeichen V ist eine Vorwärtsfahrrichtung der landwirtschaftlichen Arbeitsmaschine 50 bezeichnet. Jedes Raupenfahrwerk 53 bzw. 54 umfasst beidseitig an der vorderen Achse bzw. der hinteren Achse 52 angeordnete Raupenlaufwerke 55 bzw. 1, die ihrer jeweiligen Funktion entsprechend unterschiedlich ausgeführt sind. Die Raupenlaufwerke 55 bzw. 1 des jeweiligen Raupenfahrwerks 53 bzw. 54 sind dabei identisch aufgeführt. Eine nicht dargestellte alternative Ausgestaltung sieht vor, dass sowohl an der vorderen Achse und der hinteren Achse 52 das Raupenlaufwerk 54 mit den Raupenlaufwerken 1 angeordnet ist.

Weiterhin zeigt die Darstellung in Fig. 1 eine zweite Ausführungsform der Arbeitsmaschine 60, welche sich von der ersten dargestellten Ausführungsform dadurch unterscheidet, dass an der vorderen Achse das Raupenfahrwerk 54 mit seinen Raupenlaufwerken 1 angeordnet ist. An einer hinteren Achse 62 sind hingegen Räder 61 vorgesehen. Im Übrigen werden im Rahmen der nachfolgenden Beschreibung für identische Komponenten der Arbeitsmaschine 50 und 60 die Bezugszeichen beibehalten.

Nachstehend wird auf die Ausgestaltung des an der hinteren Achse 52 der landwirtschaftlichen Arbeitsmaschine 50 bzw. der vorderen Achse der landwirtschaftlichen Arbeitsmaschine 60 angeordneten Raupenfahrwerks 54 eingegangen, welche identisch sind. Das Raupenfahrwerk 54 ist außermittig an der hinteren Achse 52 angeordnet und in einer Pendelrichtung SR um diese schwenkbar bzw. pendelbar, wie durch den Pfeil SR angedeutet. Weiterhin umfasst die landwirtschaftliche Arbeitsmaschine 50 eine Steuerungsvorrichtung 56. In einer Kabine 57 ist ein Lenkrad 58 angeordnet, dessen Lenkbewegungen von der Steuerungsvorrichtung 56 erfasst werden.

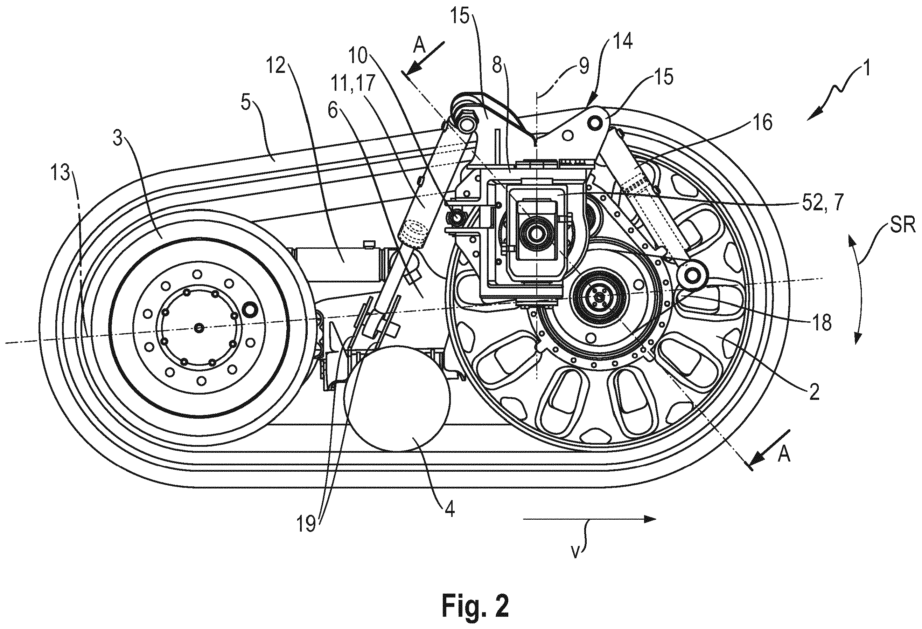

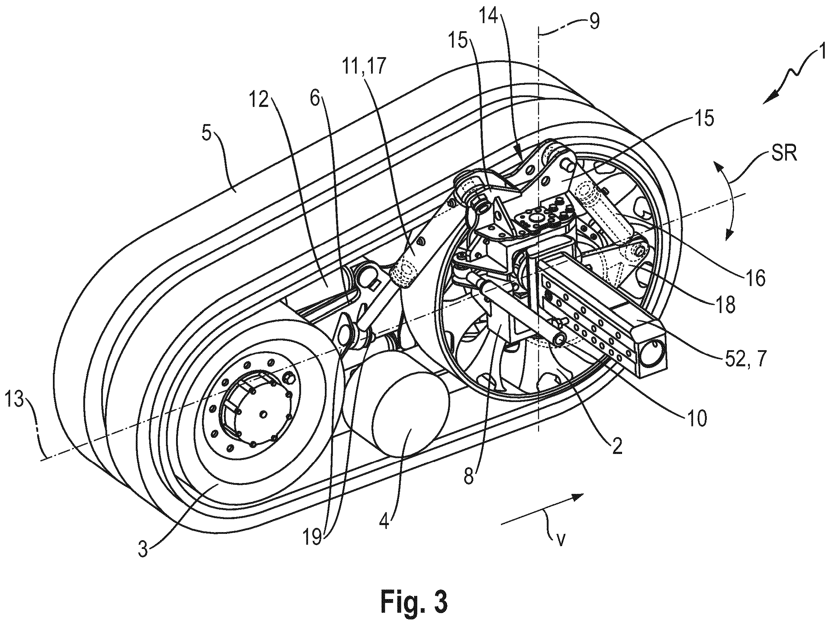

In den Fig. 2 und 3 sind eine schematische Seitenansicht des Raupenlaufwerks 1 sowie eine perspektivische Ansicht des Raupenlaufwerks 1 gemäß Fig. 1 dargestellt. Das Raupenlaufwerk 1 umfasst eine vordere Umlenkrolle 2 mit einem größeren Durchmesser sowie eine hintere Umlenkrolle 3 mit einem kleineren Durchmesser. Zwischen der vorderen Umlenkrolle 2 und der hinteren Umlenkrolle 3 ist zumindest eine Stützrolle 4 angeordnet. Die vordere und die hintere Umlenkrolle 2 und 3 sind von einem Gurtband 5 umschlossen. Die vordere Umlenkrolle 2 und die hintere Umlenkrolle 3 sind mehrteilig ausgebildet. Zwischen der vorderen Umlenkrolle 2 und der hinteren Umlenkrolle 3 erstreckt sich ein, insbesondere mehrteiliger, Tragrahmen 6, der die vordere Umlenkrolle 2 und die hintere Umlenkrolle 3 miteinander verbindet. Die vordere Umlenkrolle 2 und die hintere Umlenkrolle 3 sind jeweils drehbar an dem Tragrahmen 6 drehbar gelagert. An dem Tragrahmen 6 ist die zumindest eine Stützrolle 4, insbesondere um eine Achse parallel zur Längsachse 13 des Tragrahmens 6 pendelnd gelagert, angeordnet.

Die hintere Achse 52 der Arbeitsmaschine 50 ist als Lenktriebachse 7 ausgeführt. Von der Lenktriebachse 7 werden ein Antriebsdrehmoment bzw. eine Antriebsdrehzahl auf die Raupenlaufwerke 1 des Raupenfahrwerks 54 übertragen. Das Übertragen einer Lenkbewegung auf das jeweilige Raupenlaufwerk 1 erfolgt mittels einer Achsschenkellenkung. Die Lenktriebachse 7 ist durch jeweils einen Achsschenkel 8, der um eine vertikal verlaufende Schwenkachse 9 relativ zur Lenktriebachse 7 schwenkbar ist, mit dem Raupenlaufwerk 1 verbunden. Die jeweilige vertikal verlaufende Schwenkachse 9 ist im Bereich der vorderen Umlenkrolle 2 angeordnet. Spurstangen 10 übertragen eine Lenkbewegung auf das jeweilige Raupenlaufwerk 1 an der Lenktriebachse 7. die jeweilige Spurstange 10 erstreckt sich vom jeweiligen Achsschenkel 8 in Längsrichtung der Lenktriebachse 7. Die beiden Spurstangen 10 sind durch einen - nicht dargestellten - hydraulisch betätigbaren Lenkzylinder miteinander verbunden. Die vordere Umlenkrolle 2 ist der Lenktriebachse 7 im Wesentlichen achsparallel zugeordnet. Hierdurch wird eine im Wesentlichen direkte Übertragung des Antriebsmomentes von der Lenktriebachse 7 auf die vordere Umlenkrolle 2 erreicht. Die Lenktriebachse 7 bildet aufgrund der außermittigen Anordnung zugleich die Pendelachse der beiden an ihr angeordneten Raupenlaufwerke 1.

Wie aus der Darstellung in den Figuren 2 und 3 ersichtlich, ist an dem Tragrahmen 6 zum Spannen des Gurtbandes 5 ein Hydraulikzylinder 12 angeordnet. Der Hydraulikzylinder 12 erstreckt sich in Längsrichtung des Raupenlaufwerks 1 und steht mit der hinteren Umlenkrolle 3 in Wirkverbindung. Durch den Hydraulikzylinder 12 lässt sich eine definierte Spannkraft auf das Gurtband 5 aufbringen. Weiterhin ist aus den Figuren 2 und 3 ersichtlich, dass der zumindest eine Aktuator 11 an dem Achsschenkel 8 und dem Tragrahmen 6 angelenkt ist, der als doppeltwirkender Hydraulikzylinder 17 ausgeführt ist.

An zwei zueinander beabstandeten Abschnitten 15 eines an dem Achsschenkel 8 angeordneten Rahmenelementes 14 greifen ein vorderer Hydraulikzylinder 16 und der zumindest eine hintere Hydraulikzylinder 17 an. Die Abschnitte 15 des Rahmenelementes 14 sind oberhalb der Lenktriebachse 7 an dem Achsschenkel 8 angeordnet. Der vordere Hydraulikzylinder 16 erstreckt sich in Vorwärtsfahrrichtung V und stützt sich an einem in Vorwärtsfahrtrichtung V weisenden Hebelarm 18 an dem Gehäuse 25 des Vorgelegegetriebes 24 ab. Der zumindest eine hintere Hydraulikzylinder 17, der als doppeltwirkender Hydraulikzylinder ausgeführt ist, stützt sich an einem weiteren, an dem Tragrahmen 6 angeordneten Hebelarm 19 ab, der zwischen der vorderen Umlenkrolle und der hinteren Umlenkrolle 3 an dem Tragrahmen 6 angeordnet ist. Der vordere und hintere Hydraulikzylinder 16, 17 sind an den jeweiligen Abschnitten 15 des Rahmenelementes 14 an dem Achsschenkel 8 bzw. dem jeweiligen Hebelarm 18, 19 schwenkbar angelenkt. Der Hebelarm 19 kann als zwei parallel zueinander an dem Tragrahmen 6 angeordnete Segmente ausgebildet sein, zwischen denen der hintere Hydraulikzylinder 17 angelenkt ist. Der vordere Hydraulikzylinder 16 dient dazu, das Pendeln des jeweiligen Raupenlaufwerks 1 um die Lenktriebachse 7 als Pendelachse zu dämpfen. Durch den hinteren Hydraulikzylinder 17 wird eine veränderliche Stützkraft auf die hintere Umlenkrolle 3 aufgebracht.

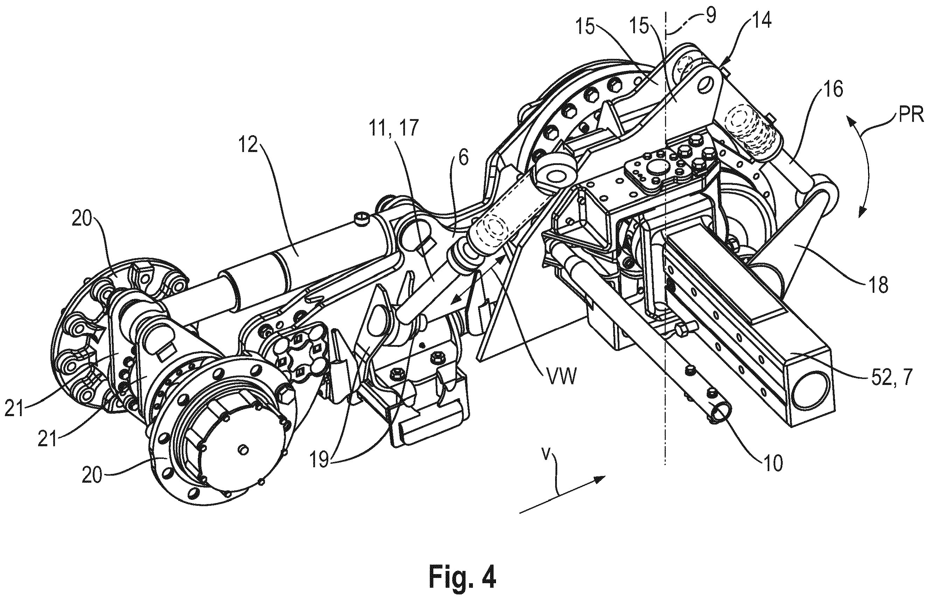

Die Darstellung in Fig. 4 zeigt eine perspektivische Ansicht des Tragrahmens 6 des Raupenlaufwerks 1. Die vordere Umlenkrolle 2, die hintere Umlenkrolle 3, die zumindest eine Stützrolle 4 sowie das Gurtband 5 sind in dieser Darstellung nicht gezeigt. Die hintere Umlenkrolle 3 ist mehrteilig ausgebildet und auf einer Welle, die endseitig Montageflansche 20 aufweist, drehfest angeordnet. Die Welle ist an dem Tragrahmen 6 drehbar gelagert. Auf der Welle sind Rahmenelement 21 angeordnet, die sich im Wesentlichen senkrecht zu der Welle erstrecken und parallel zueinander angeordnet sind. Zwischen diesen Rahmenelementen 21 ist der als Gurtspannzylinder ausgeführte Hydraulikzylinder 12 angelenkt.

Eine im Zylinder 22 geführte Kolbenstange 23 des hinteren Hydraulikzylinders 17 ist durch Druckbeaufschlagung entlang eines Verstellweges VW verfahrbar. Der Hydraulikzylinder 17 dient dazu, die hintere Umlenkrolle 3 mit einer auf den Boden gerichteten Andruckkraft zu beaufschlagen, um das Raupenlaufwerk 1 an zumindest einer weiteren Stelle beabstandet zu der Lenkachse 7 abzustützen. Hierdurch wird erreicht, dass sich durch die außermittige Anordnung des Pendelpunktes des Raupenlaufwerkes 1 eine Gleichgewichtslage hergestellt wird, wodurch ein Umschlagen des Raupenlaufwerks 1 verhindert wird. Dabei ist der zumindest eine Hydraulikzylinder 17 des Raupenlaufwerks 1 ansteuerbar, um den von dem Raupenlaufwerk 1 ausgeübten Bodendruck teilweise von der vorderen Umlenkrolle 2 in Richtung der hinteren Umlenkrolle 3 zu verlagern. Auf diese Weise lässt sich der ausgeübte Bodendruck aktiv regulieren. Bei einer Fahrt der landwirtschaftlichen Arbeitsmaschine 50 auf einem zu bearbeitenden Feld lässt sich eine gleichmäßige Verteilung des ausgeübten Bodendrucks über die Länge des jeweiligen Raupenlaufwerks 1 erreichen.

Hingegen lässt sich bei einer Straßenfahrt der landschaftlichen Arbeitsmaschine 50 durch die Ansteuerung des zumindest einen Hydraulikzylinders 17 die hintere Umlenkrolle 3 entlasten. Dies führt zu einer Verringerung der Aufstandsfläche der Raupenlaufwerke 1, was sich auf das Lenkverhalten positiv auswirkt. Das Entlasten der hinteren Umlenkrolle 3 bewirkt, dass das erforderliche Lenkmoment reduziert wird. Dies resultiert aus der Verkürzung des effektiven Hebelarms der Raupenlaufwerke 1, dann nicht über die gesamte Aufstandsfläche der Raupenlaufwerke 1 hinweg gedreht werden muss.

Bei einer Rückwärtsfahrt der landschaftlichen Arbeitsmaschine 50 ist es vorteilhaft, die hintere Umlenkrolle 3 soweit zu entlasten, dass diese angehoben wird. Dadurch lässt sich vermeiden, dass sich bei der Rückwärtsfahrt, insbesondere aufgrund des kleineren Durchmessers der hinteren Umlenkrolle 3 gegenüber der vorderen Umlenkrolle 2, das Raupenfahrwerk 54 in den Boden eingräbt.

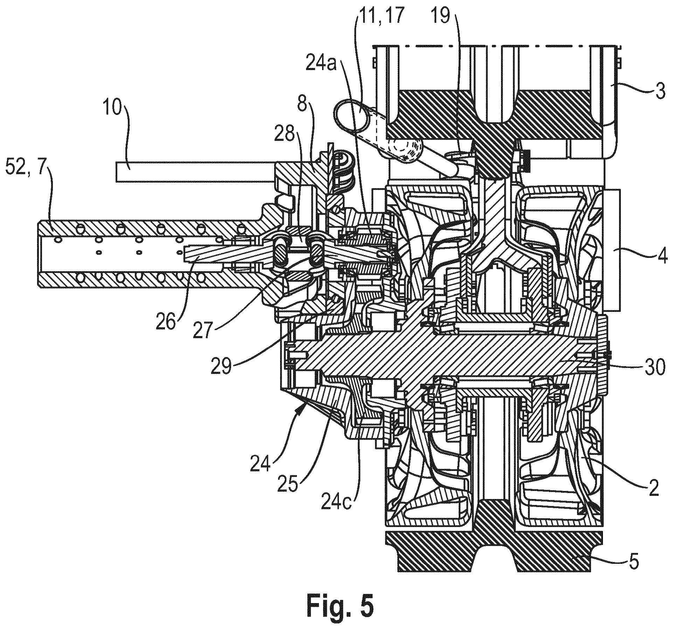

Die Darstellung in Fig. 5 zeigt eine Schnittansicht des Raupenlaufwerks 1 entlang der Linie A-A gemäß Fig. 2. Zur Übertragung des Antriebsdrehmomentes von der Lenktriebachse 7 auf die vordere Umlenkrolle 2 ist an dem Achsschenkel 8 ein Vorgelegegetriebe 24 auf der der Umlenkrolle 2 zugewandten Seite des Achsschenkels 8 angeordnet. Das Vorgelegegetriebe 24 ist als Stirnradgetriebe ausgeführt und umfasst ein erstes Zahnrad 24a, ein zweites Zahnrad 24b - in der Schnittansicht nicht sichtbares - und ein drittes Zahnrad 24c. Das Vorgelegegetriebe 24 umfasst ein Gehäuse 25, in welchem die Zahnräder 24a, 24b, 24c angeordnet sind. Eine Abtriebswelle 26 der Lenktriebachse 7 ist kardanisch mit einer Eingangswelle 27 des Vorgelegegetriebes 24 verbunden. Hierzu sind die Abtriebswelle 26 und die Eingangswelle 27 durch eine Gelenkwelle 28 trieblich miteinander verbunden. Die Eingangswelle 27 ist mittels Kegelrollenlagern im Gehäuse 25 gelagert. Die Eingangswelle 27 treibt das erste Zahnrad 24a, welches drehfest auf der Eingangswelle 27 angeordnet ist. Das erste Zahnrad 24a steht über das zweite Zahnrad 24b mit dem dritten Zahnrad 24c in Eingriff, welches drehfest auf einer Welle 30 angeordnet ist. Die Welle 30 erstreckt sich axial aus dem Gehäuse 25 und nimmt die vordere Umlenkrolle 2 auf, die drehfest mit der Welle 30 verbunden ist.

Zwischen dem Achsschenkel 8 und dem Vorgelegegetriebe 24 ist ein Lager 29 vorgesehen. Das Lager 29 ist an dem Achsschenkel 8 befestigt und ermöglicht es, das Gehäuse 25 des Vorgelegegetriebes 24 relativ zu dem Achsschenkel 8 zu verdrehen. Durch das Lager 29 ist das Gehäuse 25 um die Längsachse der Lenktriebachse 7 drehbar an dem Achsschenkel 8 angelenkt, wobei in Verbindung mit dem vorderen Hydraulikzylinder 16 mögliche Bodenunebenheiten ausgeglichen werden können. Das Lager 29 ermöglicht das Pendeln des Raupenlaufwerks 1 um die Lenktriebachse 7.

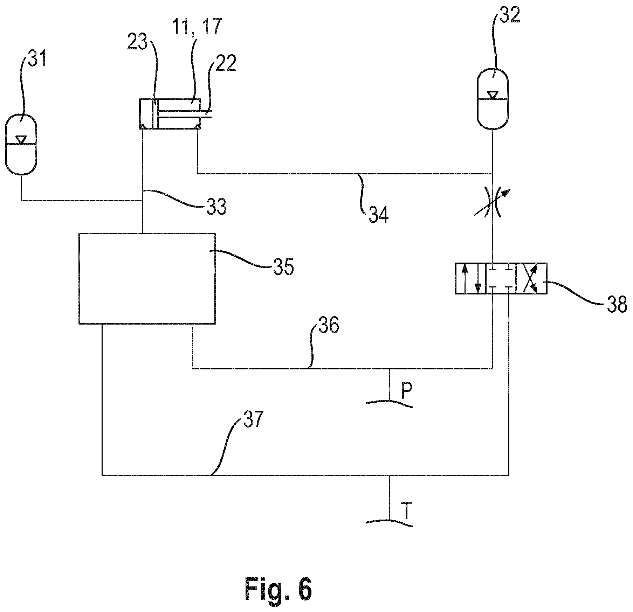

In Fig. 6 ist ein vereinfachtes Hydraulikschema, aus welchem eine Ansteuerung des zumindest einen Aktuators 11 des Raupenlaufwerks 1 hervorgeht, dargestellt. Der doppeltwirkende Hydraulikzylinder 17 ist kolbenstangenseitig bzw. kolbenbodenseitig mit einem hydraulischen Speicher 31 bzw. 32 durch Arbeitsleitungen 33 bzw. 34 verbunden. Kolbenbodenseitig wird der Hydraulikzylinder 17 durch ein Proportionalventil 35 angesteuert, welches an eine Druckleitung 36 sowie eine Tankleitung 37 angeschlossen ist. Kolbenstangenseitig wird der Hydraulikzylinder 17 durch ein Wegeventil 38, insbesondere ein 3/3-Wegeventil, angesteuert, welches ebenfalls an die Druckleitung 36 und die Tankleitung 37 angeschlossen ist. In der dargestellten Schaltstellung des Wegeventils 38 sperrt dieses, um einen auf der Kolbenstangenseite des Hydraulikzylinders 17 eingestellten konstanter Druck zu halten. Das Wegeventil 38 fungiert daher im Wesentlichen als Füllventil. Die Federung bzw. passive Bodenanpassung des jeweiligen Raupenlaufwerks 1 ist durch die hydraulischen Speicher 31, 32 realisiert. Die Speicher 31, 32 können das jeweilige Ölvolumen aufnehmen bzw. abgeben, welches im dem Hydraulikzylinder 17 hin und her bewegt werden muss, um damit dieses Bodenunebenheiten oder Steigungsänderungen (Verschränkung zwischen der vorderen Achse und der hinteren Achse 52 respektive Lenktriebachse 7) auszugleichen.

Das Proportionalventil 35 als auch das Wegeventil 38 sind durch die Steuerungsvorrichtung 56 ansteuerbar. Durch eine Variation der kolbenbodenseitigen Druckbeaufschlagung des Hydraulikzylinders 17 lässt sich der von dem jeweiligen Raupenlaufwerke 1 ausgeübte Bodendruck aktiv einstellen. Auf diese Weise ist eine Anpassung an eine jeweilige Fahrsituation der landschaftlichen Arbeitsmaschine 50 durchführbar.

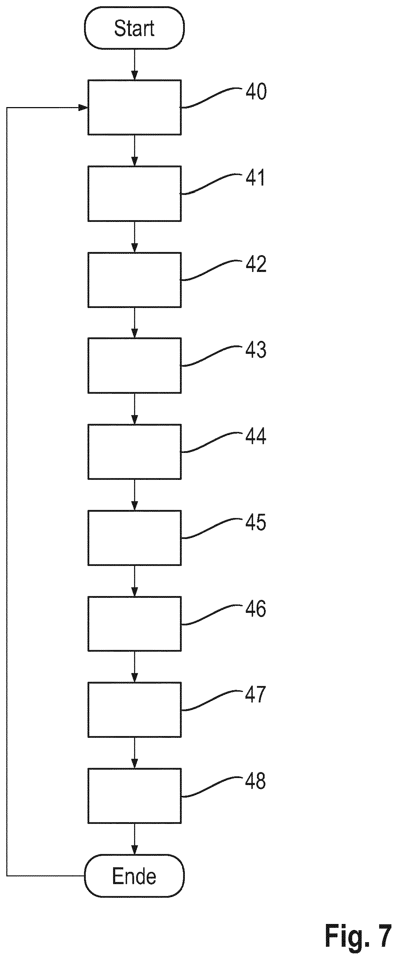

Fig. 7 stellt ein Flussdiagramm der Ansteuerung des jeweiligen Raupenlaufwerks 1 am Beispiel des Lenkens der landwirtschaftlichen Arbeitsmaschine 50 dar. Nach der Inbetriebnahme der landschaftlichen Arbeitsmaschine 50 fährt diese gemäß Schritt 40 zunächst geradeaus. Der Hydraulikdruck im Hydraulikzylinder 17 entspricht dabei einem Normaldruck, der sich Fahrsituation abhängig einstellt, wenn durch die Steuerungsvorrichtung 56 auf einen gleichmäßigen Bodendruck geregelt wird. Im Schnitt 41 wird die Betätigung des Lenkrades 58 durch eine Bedienperson von der Steuerungsvorrichtung 56 erfasst und ausgewertet. Die Betätigung des Lenkrades 58 führt dazu, dass im Schritt 42 der Druck in dem an der Lenktreibachse 7 angeordneten Lenkzylinder erhöht wird. Im Schritt 43 wird der Druckanstieg in dem Lenkzylinder detektiert. Im Schritt 44 wird durch die Ansteuerung des Proportionalventils 35 durch die Steuerungsvorrichtung 56 der Druck auf der Kolbenbodenseite des Hydraulikzylinders 17 reduziert. Dies führt dazu, dass die hintere Umlenkrolle 3 entlastet wird, wodurch das erforderliche Lenkmoment reduziert wird. Im Schritt 45 wird ein Absinken des Drucks im Lenkzylinder detektiert. Im Schritt 46 ändert sich der Lenkwinkel. Im Schritt 47 wird das Erreichen des Solllenkwinkels detektiert. Daraufhin wird im Schritt 48 der Druck in dem Hydraulikzylinder 17 durch die erneute Ansteuerung des Proportionalventils 35 wieder erhöht. Der Regelvorgang endet und springt zurück auf den Schritt 40, bis erneut ein Lenkvorgang detektiert wird. Die vorstehend beschriebene Regelung anhand des Druckes in dem Lenkzylinder sowie des Lenkwinkels dient der Lenkerleichterung.

Alternativ ist es zur Ansteuerung des jeweiligen Raupenlaufwerks 1 beim Lenken zur Lenkerleichterung denkbar, ein auf das Lenkrad 58 aufgebrachtes Moment als Eingangsgröße zu verwenden, welches die Bedienperson bei der Betätigung des Lenkrades 58 ausübt.

Bei einer Rückwärtsfahrt erfolgt die Ansteuerung des Hydraulikzylinders 17 in entsprechender Weise. Wird durch die Steuerungsvorrichtung 56 detektiert, dass ein Fahrtrichtungswechsel vorgenommen werden soll, d.h. von der Vorwärtsfahrt in die Rückwärtsfahrt umgeschaltet wird, so steuert die Steuerungsvorrichtung 56 das Proportionalventil 35 in der Weise an, dass der Druck auf der Kolbenbodenseite des Hydraulikzylinders 17 reduziert wird. Die Reduzierung des Drucks auf der Kolbenbodenseite des Hydraulikzylinders 17 kann von einer Entlastung bis zu einem Ausheben der hinteren Umlenkrolle 3 durchgeführt werden. Wird nach der Rückwärtsfahrt der Stillstand der landschaftlichen Arbeitsmaschine bzw. ein erneuter Fahrtrichtungswechsel detektiert, so wird das Proportionalventil 35 von der Steuerungsvorrichtung 56 erneut angesteuert, um den Normaldruck wiederherzustellen.

Wie weiter oben bereits ausgeführt, lässt sich der von den Raupenlaufwerken 1 ausgeübte Bodendruck aktiv regeln. In Abhängigkeit davon, ob die Arbeitsmaschine 50 bergauf, bergab oder in der Ebene fährt, führt dies zu einer Änderung der Gewichtsverteilung zwischen der vorderen Umlenkrolle 2 und der hinteren Umlenkrolle 3. Durch eine Ansteuerung des Proportionalventils 35 bzw. des Wegeventils 38 lässt sich der neigungsabhängigen Änderung der Gewichtsverteilung entgegenwirken. Das Erkennen, ob sich die Arbeitsmaschine 50 in einer geneigten Position befindet, kann beispielsweise mittels eines Neigungssensors an Arbeitsmaschine 50 erfolgen, dessen Signale von der Steuerungsvorrichtung 56 ausgewertet werden.

Die Vorteile des beschriebenen Raupenlaufwerks 1 kommen ebenso bei einer Ausgestaltung der Arbeitsmaschine 50 als Vollraupe oder der Arbeitsmaschine 60 als Halbraupe zum Tragen. Entsprechendes gilt bei der Ausgestaltung der Arbeitsmaschine 50 mit identischen Raupenfahrwerken 54 mit den Raupenlaufwerken 1 an der vorderen und der hinteren Achse 52. In diesem Fall können beide Achsen mit einer Achsschenkellenkung versehen sein, wie sie weiter oben beschrieben ist.

**Bezugszeichenliste**

| | | | |
|---|---|---|---|
| 1 | Raupenlaufwerk | 28 | Gelenkwelle |
| 2 | Vordere Umlenkrolle | 29 | Lager |
| 3 | Hintere Umlenkrolle | 30 | Welle |
| 4 | Stützrolle | 31 | Hydraulischer Speicher |
| 5 | Gurtband | 32 | Hydraulischer Speicher |
| 6 | Tragrahmen | 33 | Arbeitsleitung |
| 7 | Lenktriebachse | 34 | Arbeitsleitung |
| 8 | Achsschenkel | 35 | Proportionalventil |
| 9 | Schwenkachse | 36 | Druckleitung |
| 10 | Spurstange | 37 | Tankleitung |
| 11 | Aktuator | 38 | Wegeventil |
| 12 | Hydraulikzylinder | 40 | Schritt |
| 13 | Längsachse von 6 | 41 | Schritt |
| 14 | Rahmenelement | 42 | Schritt |
| 15 | Abschnitt | 43 | Schritt |
| 16 | Hydraulikzylinder | 44 | Schritt |
| 17 | Hydraulikzylinder | 45 | Schritt |
| 18 | Hebelarm | 46 | Schritt |
| 19 | Hebelarm | 47 | Schritt |
| 20 | Montageflansch | 48 | Schritt |
| 21 | Rahmenelement | | |
| 22 | Zylinder | 50 | Arbeitsmaschine |
| 23 | Kolbenstange | | |
| 24 | Vorgelegegetriebe | 52 | Hintere Achse |
| 24a | Erstes Zahnrad | 53 | Raupenfahrwerk |
| 24b | Zweites Zahnrad | 54 | Raupenfahrwerk |
| 24c | Drittes Zahnrad | 55 | Raupenlaufwerk |
| 25 | Gehäuse | 56 | Steuerungsvorrichtung |
| 26 | Abtriebswelle | 57 | Kabine |
| 27 | Eingangswelle | 58 | Lenkrad |
| 60 | Arbeitsmaschine | | |
| 61 | Rad | | |
| 62 | Hintere Achse | | |
| SR | Pendelrichtung | | |
| V | Vorwärtsfahrrichtung | | |
| VW | Verstellweg | | |

## Patentansprüche

1. Selbstfahrende Erntemaschine (50, 60), umfassend zumindest ein zwei Raupenlaufwerke (1) aufweisendes Raupenfahrwerk (54), welches an zumindest einer Achse (52) der Arbeitsmaschine (50, 60) angeordnet ist, wobei jedes Raupenlaufwerk (1) eine vordere Umlenkrolle (2) und eine hintere Umlenkrolle (3) sowie zumindest eine dazwischenliegende Stützrolle (4) aufweist, **dadurch gekennzeichnet, dass** die Achse (52), welche die Raupenlaufwerke (1) beidseitig aufnimmt, als eine Lenktriebachse (7) ausgebildet ist, wobei die jeweilige in Vorwärtsfahrrichtung (V) weisende vordere Umlenkrolle (2) einen größeren Durchmesser als die hintere Umlenkrolle (3) aufweist.

2. Selbstfahrende Erntemaschine (50, 60) nach Anspruch 1, **dadurch gekennzeichnet, dass** zu einer Übertragung einer Lenkbewegung das jeweilige Raupenlaufwerk (1) mittels einer Achsschenkellenkung an der Lenktriebachse (7) um eine vertikal verlaufende Schwenkachse (9) schwenkbar angelenkt ist.

3. Selbstfahrende Erntemaschine (50, 60) nach Anspruch 1 oder 2, **dadurch gekennzeichnet, dass** das jeweilige Raupenlaufwerk (1) außermittig an der Lenktriebachse (7) angeordnet und um diese schwenkbar ist.

4. Selbstfahrende Erntemaschine (50, 60) nach einem der Ansprüche 1 bis 3, **dadurch gekennzeichnet, dass** die vordere Umlenkrolle (2) der Lenktriebachse (7) im Wesentlichen achsparallel zugeordnet ist.

5. Selbstfahrende Erntemaschine (50, 60) nach einem der Ansprüche 1 bis 4, **dadurch gekennzeichnet, dass** die jeweilige hintere Umlenkrolle (3) an einem Tragrahmen (6) angeordnet ist, welcher um eine außermittige, im Bereich der vorderen Umlenkrolle (2) positionierte, horizontal verlaufende Achse schwenkbar ist.

6. Selbstfahrende Erntemaschine (50, 60) nach Anspruch 5, **dadurch gekennzeichnet, dass** zur Abstützung der hinteren Umlenkrolle (3) des jeweiligen Raupenlaufwerks (1) gegenüber der Lenktriebachse (7) zumindest ein Aktuator (11) vorgesehen ist, welcher an dem Tragrahmen (6) zwischen der vorderen Umlenkrolle (2) und der hinteren Umlenkrolle (3) und einem Rahmenelement (14), welches am Achsschenkel (8) oberhalb der Lenktriebachse (7) des jeweiligen Raupenlaufwerks (1) angeordnet ist, angelenkt ist.

7. Selbstfahrende Erntemaschine (50, 60) nach einem der vorangehenden Ansprüche, **dadurch gekennzeichnet, dass** der zumindest eine Aktuator (11) als doppeltwirkender Hydraulikzylinder (17) ausgeführt ist.

8. Selbstfahrende Erntemaschine (50, 60) nach Anspruch 7, **dadurch gekennzeichnet, dass** der zumindest eine Hydraulikzylinder (17) kolbenbodenseitig und kolbenringseitig jeweils mit einem hydraulischen Speicher (31, 32) verbunden ist.

9. Selbstfahrende Erntemaschine (50, 60) nach Anspruch 7 oder 8, **dadurch gekennzeichnet, dass** der zumindest eine Hydraulikzylinder (17) eines Raupenlaufwerks (1) ansteuerbar ist, um den von dem Raupenlaufwerk (1) ausgeübten Bodendruck zwischen der vorderen Umlenkrolle (2) und der hinteren Umlenkrolle (3) zu variieren.

10. Selbstfahrende Erntemaschine (50, 60) nach Anspruch 7 bis 9, **dadurch gekennzeichnet, dass** der zumindest eine Hydraulikzylinder (17) eines Raupenlaufwerks (1) ansteuerbar ist, die hintere Umlenkrolle (3) zumindest zu entlasten oder anzuheben.

11. Selbstfahrende Erntemaschine (50, 60) nach einem der vorangehenden Ansprüche, **dadurch gekennzeichnet, dass** an der Lenktriebachse (7) außenseitig jeweils ein Vorgelegegetriebe (24) an einem Achsschenkel (8) angeordnet ist, welche die vorderen Umlenkrollen (2) trieblich mit der Lenktriebachse (7) verbinden.

12. Selbstfahrende Erntemaschine (50, 60) nach einem der vorangehenden Ansprüche, **dadurch gekennzeichnet, dass** die Arbeitsmaschine (50) eine Steuerungsvorrichtung (56) umfasst, welche dazu eingerichtet ist, den zumindest einen Aktuator (11, 17) in Abhängigkeit von einem Hydraulikdruck in einem Lenkzylinder an der Lenktriebachse (7) anzusteuern.

13. Selbstfahrende Erntemaschine (50, 60) nach einem der vorangehenden Ansprüche, **dadurch gekennzeichnet, dass** die Arbeitsmaschine (50) eine Steuerungsvorrichtung (56) umfasst, welche dazu eingerichtet ist, den zumindest einen Aktuator (11, 17) in Abhängigkeit von einem Moment bei der Betätigung eines Lenkrades (58) anzusteuern.

14. Selbstfahrende Erntemaschine (50, 60) nach einem der Ansprüche 12 oder 13, **dadurch gekennzeichnet, dass** die Steuerungsvorrichtung (56) dazu eingerichtet ist, den zumindest einen Aktuator (11, 17) in Abhängigkeit von einer Neigung der Arbeitsmaschine (50, 60) anzusteuern

15. Selbstfahrende Erntemaschine (50, 60) nach einem der vorangehenden Ansprüche, **dadurch gekennzeichnet, dass** die Lenktriebachse (7) als lenkbare vordere Achse und/ oder hintere Achse (52) der Arbeitsmaschine (50, 60) ausgebildet ist.

## Claims

1. Self-propelled harvester (50, 60), comprising at least one crawler chassis (54) having two crawler tracks (1) and being positioned on at least one axle (52) of the working machine (50, 60), wherein each crawler track (1) has a front deflection roller (2) and a rear deflection roller (3) and at least one support roller (4) located in between, **characterized in that** the axle (52), which accommodates the crawler tracks (1) on both sides, is designed as a steering drive axle (7), wherein the respective front deflection roller (2) pointing in the forwards travel direction (V) has a larger diameter than the rear deflection roller (3).

2. Self-propelled harvester (50, 60) according to Claim 1, **characterized in that**, for transmitting a steering movement, the respective crawler track (1) is articulated on the steering drive axle (7) so as to be pivotable about a vertically running pivot axis (9) by means of a double-pivot steering system.

3. Self-propelled harvester (50, 60) according to Claim 1 or 2, **characterized in that** the respective crawler track (1) is arranged eccentrically on the steering drive axle (7) and is pivotable about the latter.

4. Self-propelled harvester (50, 60) according to one of Claims 1 to 3, **characterized in that** the front deflection roller (2) is assigned to the steering drive axle (7) in a substantially axially parallel manner.

5. Self-propelled harvester (50, 60) according to one of Claims 1 to 4, **characterized in that** the respective rear deflection roller (3) is arranged on a support frame (6) which is pivotable about an eccentric, horizontally running axis positioned in the region of the front deflection roller (2).

6. Self-propelled harvester (50, 60) according to Claim 5, **characterized in that** at least one actuator (11) is provided for supporting the rear deflection roller (3) of the respective crawler track (1) with respect to the steering drive axle (7), said actuator being articulated on the support frame (6) between the front deflection roller (2) and the rear deflection roller (3) and a frame element (14), which is arranged on the steering knuckle (8) above the steering drive axle (7) of the respective crawler track (1).

7. Self-propelled harvester (50, 60) according to one of the preceding claims, **characterized in that** the at least one actuator (11) is designed as a double-acting hydraulic cylinder (17).

8. Self-propelled harvester (50, 60) according to Claim 7, **characterized in that** the at least one hydraulic cylinder (17) is connected to a hydraulic accumulator (31, 32) in each case on the piston crown side and on the piston ring side.

9. Self-propelled harvester (50, 60) according to Claim 7 or 8, **characterized in that** the at least one hydraulic cylinder (17) of a crawler track (1) can be activated in order to vary the ground pressure exerted by the crawler track (1) between the front deflection roller (2) and the rear deflection roller (3).

10. Self-propelled harvester (50, 60) according to Claims 7 to 9, **characterized in that** the at least one hydraulic cylinder (17) of a crawler track (1) can be activated at least to relieve the load on or to raise the rear deflection roller (3).

11. Self-propelled harvester (50, 60) according to one of the preceding claims, **characterized in that** a countershaft transmission (24) is in each case arranged on a steering knuckle (8) on the outside of the steering drive axle (7), the countershaft transmissions connecting the front deflection rollers (2) to the steering drive axle (7) in terms of drive.

12. Self-propelled harvester (50, 60) according to one of the preceding claims, **characterized in that** the working machine (50) comprises a control device (56) which is designed to activate the at least one actuator (11, 17) depending on a hydraulic pressure in a steering cylinder on the steering drive axle (7).

13. Self-propelled harvester (50, 60) according to one of the preceding claims, **characterized in that** the working machine (50) comprises a control device (56) which is designed to activate the at least one actuator (11, 17) depending on a torque during operation of a steering wheel (58).

14. Self-propelled harvester (50, 60) according to either of Claims 12 and 13, **characterized in that** the control device (56) is designed to activate the at least one actuator (11, 17) depending on an inclination of the working machine (50, 60).

15. Self-propelled harvester (50, 60) according to one of the preceding claims, **characterized in that** the steering drive axle (7) is designed as a steerable front axle and/or rear axle (52) of the working machine (50, 60) .

## Revendications

1. Moissonneuse automotrice (50, 60) comprenant au moins un train de roulement à chenilles (54) comportant deux entraînements à chenilles (1), lequel est disposé sur au moins un essieu (52) de la machine de travail (50, 60), chaque entraînement à chenilles (1) comportant un galet de renvoi avant (2) et un galet de renvoi arrière (3) ainsi qu'au moins un galet d'appui intermédiaire (4), **caractérisée en ce que** l'essieu (52) recevant les entraînements à chenilles (1) des deux côtés est formé comme un essieu moteur de direction (7), le galet de renvoi avant (2) respectif pointant dans le sens de marche avant (V) présentant un diamètre plus grand que celui du galet de renvoi arrière (3).

2. Moissonneuse automotrice (50, 60) selon la revendication 1, **caractérisée en ce que** pour une transmission d'un mouvement de direction, l'entraînement à chenilles (1) respectif est articulé de manière à pouvoir pivoter autour d'un axe de pivotement (9) s'étendant verticalement sur l'essieu moteur de direction (7) au moyen d'une direction à fusée d'essieu.

3. Moissonneuse automotrice (50, 60) selon la revendication 1 ou 2, **caractérisée en ce que** l'entraînement à chenilles (1) respectif est disposé de manière excentrée sur l'essieu moteur de direction (7) et peut pivoter autour de celui-ci.

4. Moissonneuse automotrice (50, 60) selon l'une des revendications 1 à 3, **caractérisée en ce que** le galet de renvoi avant (2) est associé à l'essieu moteur de direction (7) sensiblement parallèlement à l'axe.

5. Moissonneuse automotrice (50, 60) selon l'une des revendications 1 à 4, **caractérisée en ce que** le galet de renvoi arrière (3) respectif est disposé sur un châssis porteur (6) qui peut être pivoté autour d'un axe excentré, positionné dans la zone du galet de renvoi avant (2), s'étendant horizontalement.

6. Moissonneuse automotrice (50, 60) selon la revendication 5, **caractérisée en ce qu'**au moins un actionneur (11) , qui est articulé sur le châssis porteur (6) entre le galet de renvoi avant (2) et le galet de renvoi arrière (3) et un élément (14) de châssis, qui est disposé sur le porte-fusée (8) au-dessus de l'essieu moteur de direction (7) de l'entraînement à chenilles (1) respectif, est prévu pour supporter le galet de renvoi arrière (3) de l'entraînement à chenilles (1) respectif par rapport à l'essieu moteur de direction (7).

7. Moissonneuse automotrice (50, 60) selon l'une des revendications précédentes, **caractérisée en ce que** l'au moins un actionneur (11) est réalisé sous la forme d'un vérin hydraulique (17) à double action.

8. Moissonneuse automotrice (50, 60) selon la revendication 7, **caractérisée en ce que** l'au moins un vérin hydraulique (17) est relié à un accumulateur hydraulique (31, 32) respectivement du côté de la tête de piston et du côté du segment de piston.

9. Moissonneuse automotrice (50, 60) selon la revendication 7 ou 8, **caractérisée en ce que** l'au moins un vérin hydraulique (17) d'un entraînement à chenilles (1) peut être piloté pour faire varier la pression au sol exercée par l'entraînement à chenilles (1) entre le galet de renvoi avant (2) et le galet de renvoi arrière (3).

10. Moissonneuse automotrice (50, 60) selon les revendications 7 à 9, **caractérisée en ce que** l'au moins un vérin hydraulique (17) d'un entraînement à chenilles (1) peut être piloté pour au moins soulager ou relever le galet de renvoi arrière (3).

11. Moissonneuse automotrice (50, 60) selon l'une des revendications précédentes, **caractérisée en ce qu'**est disposée, sur l'axe moteur de direction (7) côté extérieur, respectivement une transmission intermédiaire (24) sur un porte-fusée (8), que les galets de renvoi avant (2) relient en entraînement à l'axe moteur de direction (7).

12. Moissonneuse automotrice (50, 60) selon l'une des revendications précédentes, **caractérisée en ce que** la machine de travail (50) comprend un dispositif de commande (56) qui est mis au point pour piloter l'au moins un actionneur (11, 17) en fonction d'une pression hydraulique dans un vérin de direction sur l'essieu moteur de direction (7).

13. Moissonneuse automotrice (50, 60) selon l'une des revendications précédentes, **caractérisée en ce que** la machine de travail (50) comprend un dispositif de commande (56) qui est mis au point pour piloter l'au moins un actionneur (11, 17) en fonction d'un couple lors de l'actionnement d'un volant de direction (58).

14. Moissonneuse automotrice (50, 60) selon l'une des revendications 12 ou 13, **caractérisée en ce que** le dispositif de commande (56) est mis au point pour piloter l'au moins un actionneur (11, 17) en fonction d'une inclinaison de la machine de travail (50, 60).

15. Moissonneuse automotrice (50, 60) selon l'une des revendications précédentes, **caractérisée en ce que** l'essieu moteur de direction (7) est formé comme un essieu avant et/ou un essieu arrière (52) dirigeables de la machine de travail (50, 60).
